# FASCICULE DE BREVET EUROPEEN

(11) **EP 3 708 454 B1**
(45) Date de publication et mention de la délivrance du brevet: **25.05.2022**
(21) Numéro de dépôt: 20162383.2
(22) Date de dépôt: 11.03.2020
(51) Int. Cl.: B61F 5/24, F16F 9/19, F16F 9/46, F16F 9/512

(54) **VÉHICULE FERROVIAIRE COMPRENANT UN SYSTÈME D'AMORTISSEMENT SEMI-ACTIF ET PROCÉDÉ DE CIRCULATION ASSOCIÉ**
SCHIENENFAHRZEUG, DAS EIN SEMIAKTIVES STOSSDÄMPFUNGSSYSTEM UMFASST, UND ENTSPRECHENDES FAHRVERFAHREN
RAILWAY VEHICLE COMPRISING A SYSTEM FOR SEMI-ACTIVE DAMPING AND ASSOCIATED CIRCULATION METHOD

(30) Priorité: 11.03.2019 FR 1902449
(43) Date de publication de la demande: 16.09.2020
(73) Titulaire: ALSTOM Transport Technologies, 93400 Saint-Ouen (FR)
(72) Inventeur: TISSIER, Jason, 71390 BUXY (FR); HAM-LIVET, Guillaume, 71210 SAINT-EUSÈBE (FR); BAUSSANT, Cédric, 71710 SAINT-SYMPHORIEN DE MARMAGNE (FR)
(74) Mandataire: Lavoix

(56) Documents cités:
- EP-A1- 2 216 228
- EP-A2- 1 010 608
- JP-A- 2011 025 751
- US-A1- 2006 181 034

## Description

La présente invention concerne un véhicule ferroviaire comprenant au moins une voiture et au moins un bogie portant la voiture, le bogie comprenant un châssis et un système d'amortissement hydraulique semi-actif entre le châssis et la voiture.

Pendant les opérations de roulage sur une voie, un véhicule ferroviaire subit des vibrations et des mouvements de la voiture par rapport à la voie. Lorsque le véhicule ferroviaire transporte des passagers, ces vibrations et mouvements entraînent un inconfort pour les passagers. Par ailleurs, lorsque le véhicule ferroviaire transporte des marchandises, celles-ci peuvent être dégradées par les vibrations et mouvements. Il est courant de disposer un système d'amortissement hydraulique entre le châssis du bogie et la voiture afin de remédier à ces inconvénients. Cependant, les systèmes d'amortissement hydrauliques connus comprennent un circuit hydraulique complexe et volumineux.

EP 2 216 228 décrit un véhicule ferroviaire comprenant une caisse et au moins un bogie portant la caisse du véhicule, et un système de pendulation comportant un vérin hydraulique et un balancier entre le bogie et la caisse du véhicule.

L'un des buts de l'invention est de remédier aux inconvénients précités en proposant un véhicule ferroviaire comprenant un système d'amortissement hydraulique simplifié, économique à produire, tout en assurant la sécurité du véhicule en cas de panne.

A cet effet, la présente invention a pour objet un véhicule ferroviaire comprenant au moins une voiture et au moins un bogie portant la voiture, la voiture comprenant une caisse délimitant un extérieur de la voiture et un intérieur de la voiture, propre à recevoir des passagers ou des marchandises, le bogie comprenant un châssis et un système d'amortissement hydraulique semi-actif entre le châssis et la voiture, le système d'amortissement hydraulique semi-actif comprenant :
- un piston et une tige montés coulissants à l'intérieur d'un corps creux cylindrique, le piston définissant une première chambre et une deuxième chambre dans le corps creux cylindrique, lesdites première et deuxième chambres s'étendant de part et d'autre dudit piston, la tige s'étendant dans la première chambre,
- un pont de valves, connecté fluidiquement respectivement à la première chambre et à la deuxième chambre, le pont de valves comprenant quatre valves anti-retour passives, et
- un limiteur de pression, le système d'amortissement hydraulique semi-actif étant configuré pour assurer une circulation de fluide en sens unique à travers le système d'amortissement,
dans lequel le système d'amortissement hydraulique est dépourvu de source d'énergie de puissance extérieure au système, par exemple une source d'énergie électrique ou une source d'énergie pneumatique, et dans lequel le système d'amortissement hydraulique semi-actif est intégré au moins partiellement à l'intérieur de la voiture.

Le pont de valves anti-retour permet un redressement du débit de fluide en sortie des deux chambres fonctionnant alternativement en compression et en détente. En cas de panne, le système d'amortissement hydraulique fonctionne de façon passive, le limiteur de pression évitant des dommages à une suspension du véhicule ferroviaire dus à une haute pression et aux organes du véhicule ferroviaire environnants dus aux efforts d'amortissement trop élevés.

Le véhicule ferroviaire selon l'invention comprend ainsi un système d'amortissement hydraulique simple, économique à produire, tout en assurant la sécurité du véhicule en cas de panne.

Selon d'autres caractéristiques du véhicule ferroviaire selon l'invention, prises seules ou selon toutes combinaisons techniquement possibles :
le système d'amortissement hydraulique semi-actif comprend en outre un accumulateur de fluide connecté fluidiquement au pont de valves;
le système d'amortissement hydraulique semi-actif comprend en outre une valve active proportionnelle connectée fluidiquement au pont de valves.

La valve active proportionnelle permet d'assurer une caractéristique passive suffisante (en cas d'absence de pilotage de la caractéristique de cette valve pour éviter tout impact sur le service du véhicule ferroviaire.

Selon d'autres caractéristiques du véhicule ferroviaire selon l'invention, prises seules ou selon toutes combinaisons techniquement possibles :
la valve active proportionnelle et le limiteur de pression sont montés en parallèle ;
le système d'amortissement hydraulique semi-actif est agencé de telle sorte que lorsque la première chambre contient du fluide à une première pression supérieure à la deuxième pression du fluide contenu dans la deuxième chambre, le fluide contenu dans la première chambre est expulsé de la première chambre en direction du limiteur de pression, et/ou de la valve proportionnelle, et/ou de l'accumulateur de fluide avant d'être dirigé vers la deuxième chambre ;
le système d'amortissement hydraulique semi-actif est agencé de telle sorte que lorsque la première chambre contient du fluide à une première pression supérieure à la deuxième pression du fluide contenu dans la deuxième chambre, le fluide contenu dans la première chambre est expulsé de la première chambre en direction du limiteur de pression, et/ou de la valve proportionnelle, et/ou de l'accumulateur de fluide avant d'être dirigé vers la deuxième chambre.

La présente invention a également pour objet un procédé de circulation d'un véhicule ferroviaire tel que décrit plus haut, le pont de valves comprenant une valve anti-retour proximale du côté de la tige, une valve anti-retour proximale du côté du piston, une valve anti-retour distale du côté de la tige, et une valve anti-retour distale du côté du piston,
dans lequel, lors d'une phase de compression,
la valve anti-retour distale du côté du piston est fermée alors que la valve anti-retour proximale du côté du piston s'active, laissant ainsi circuler le volume de fluide expulsé de la deuxième chambre,
- le limiteur de pression et la valve anti-retour proximale disposée du côté de la tige sont alimentés,
- la valve anti-retour proximale disposée du côté de la tige est fermée,
- le limiteur de pression reste fermé en condition nominale de fonctionnement mais libère la circulation du fluide dès lors que la deuxième pression dépasse une valeur réglée de pression de décharge,
- le fluide alimente ensuite les valves anti-retour distales et,
- la valve anti-retour distale du côté du piston reste fermée par déséquilibre entre la deuxième pression et une pression de fluide régnant dans une branche distale de circuit hydraulique entre les valves anti-retour distales et, la deuxième pression étant supérieure à la pression de fluide régnant dans la branche distale,
- la valve anti-retour distale du côté de la tige s'ouvre par déséquilibre entre la première pression de la première chambre, et la pression de fluide régnant dans la branche distale, la pression de fluide régnant dans la branche distale étant supérieure à la première pression, alimentant la première chambre.

Avantageusement, dans le procédé de circulation,
lors d'une phase de détente, la valve anti-retour distale du côté de la tige est fermée alors que la valve anti-retour proximale du côté de la tige s'active, laissant ainsi circuler le volume de fluide expulsé de la première chambre,
   - le limiteur de pression et la valve anti-retour proximale disposée du côté du piston sont alimentés,
   - la valve anti-retour proximale disposée du côté du piston est fermée,
   - le limiteur de pression reste fermé en condition nominale de fonctionnement mais libère la circulation du fluide dès lors que la première pression dépasse la valeur réglée de pression de décharge,
   - le fluide alimente ensuite les valves anti-retour distales et
   - la valve anti-retour distale du côté de la tige reste fermée par déséquilibre entre la première pression et la pression de fluide régnant dans la branche distale, la deuxième pression étant supérieure à la pression de fluide régnant dans la branche distale,
   - la valve anti-retour distale du côté du piston s'ouvre par déséquilibre entre la deuxième pression et la pression de fluide régnant dans la branche distale, la pression de fluide régnant dans la branche distale étant supérieure à la deuxième pression, alimentant la deuxième chambre ;
le système d'amortissement semi-actif comprend en outre un accumulateur de fluide comprenant du fluide à une pression et une valve active proportionnelle connectés fluidiquement au pont de valves, la circulation de fluide à travers la valve active proportionnelle générant une perte de charge variable, et dans lequel le volume de fluide expulsé de la deuxième chambre à la deuxième pression est compensé dans la première chambre à la première pression par l'accumulateur de fluide à la pression, respectivement le volume de fluide expulsé de la première chambre à la première pression est compensé dans la deuxième chambre à la deuxième pression par l'accumulateur de fluide à la pression.

L'invention sera mieux comprise à la lecture de la description qui va suivre, donnée uniquement à titre d'exemple et faite en se référant aux figures annexées parmi lesquelles :
La Figure 1 présente un schéma simplifié en coupe transversale d'un véhicule ferroviaire selon l'invention ;
La Figure 2 présente un système d'amortissement hydraulique semi-actif du véhicule ferroviaire selon l'invention en phase de compression; et
La Figure 3 présente le système d'amortissement hydraulique semi-actif de la Figure 2 en phase de détente.

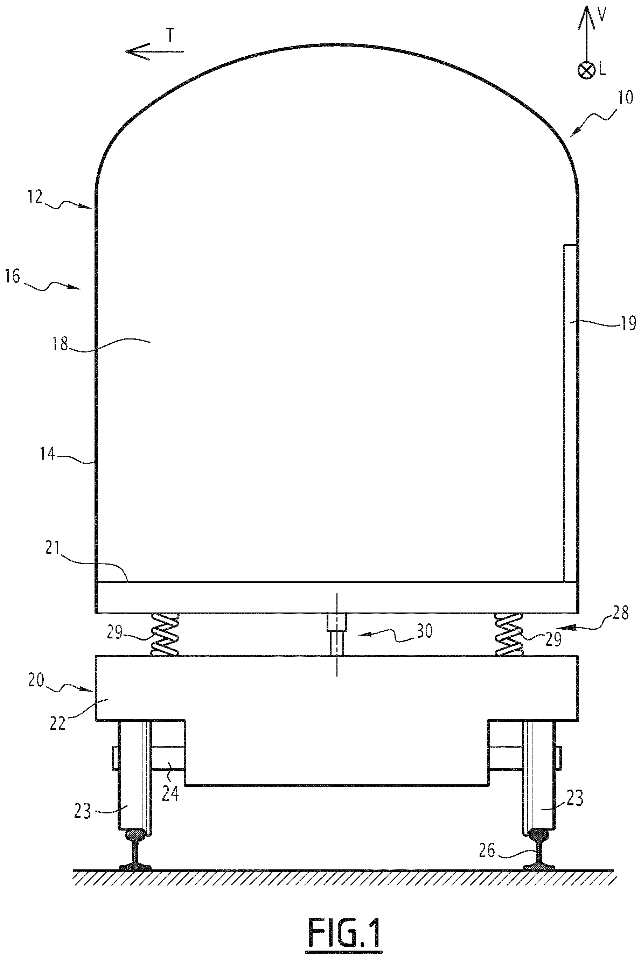

Sur la Figure 1 est représenté un véhicule ferroviaire. Le véhicule ferroviaire 10 comprend au moins une voiture 12. De préférence, le véhicule ferroviaire 10 comprend une pluralité de voitures 12.

La voiture 12 comprend une caisse 14 délimitant un extérieur 16 de la voiture 12 et un intérieur 18 de la voiture 12, propre à recevoir des passagers ou des marchandises. De préférence, la voiture 12 comprend au moins une porte 19 permettant l'entrée et la sortie de passagers et/ou de marchandises, et un plancher 21.

Le véhicule ferroviaire 10 comprend en outre au moins un bogie 20 portant la voiture 12 et s'étendant au moins en partie sous le plancher 21. Le bogie 20 comprend un châssis 22, des roues 23 montées mobiles en rotation autour du bogie 20 sur des essieux 24, et propres à rouler sur des rails 26 pour déplacer le véhicule ferroviaire 10.

Une direction d'élévation V est définie entre les rails 26, le bogie 20 et la voiture 12 perpendiculairement à une direction de circulation L normale du véhicule ferroviaire 10.

Le bogie 20 comprend de préférence au moins une suspension 28 entre le châssis 22 du bogie 20 et la caisse 14 de la voiture 12, plus particulièrement entre le châssis 22 du bogie 20 et le plancher 21 de la voiture 12.

La suspension 28 permet d'apporter une raideur et un amortissement et de supporter une charge portée par le bogie 20.

Dans l'exemple de la Figure 1, la suspension 28 comprend quatre ressorts hélicoïdaux 29 dont deux sont visibles. En variante, la suspension 28 comprend un nombre de ressorts différent, ou se présente sous d'autres formes connues.

Le véhicule 10 comprend en outre un système d'amortissement hydraulique 30 semi-actif entre le châssis 22 du bogie 20 et la caisse 14 de la voiture 12, plus particulièrement entre le châssis 22 du bogie 20 et le plancher 21 de la voiture 12. Dans l'exemple de la Figure 1, le système d'amortissement hydraulique semi-actif 30 est compris dans la suspension 28.

Le système d'amortissement hydraulique 30 semi-actif permet d'assurer un amortissement du véhicule ferroviaire 10 lorsque le véhicule est soumis à des vibrations lors de son roulage sur les rails 26.

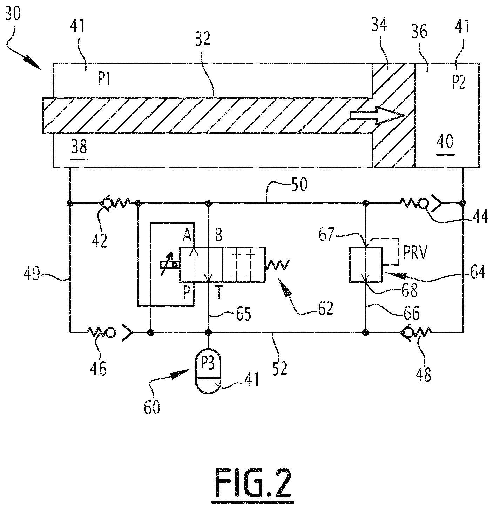

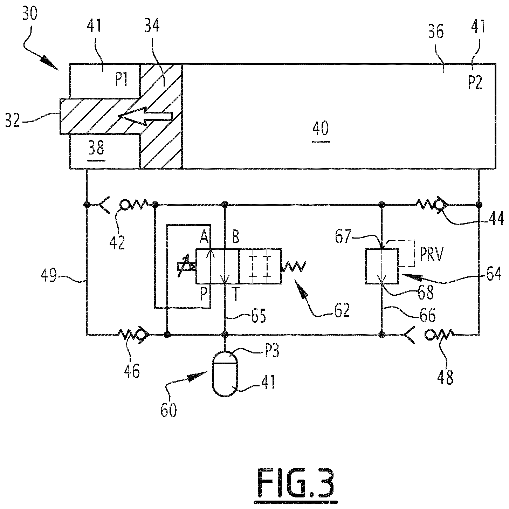

Comme représenté sur les Figures 2 et 3, le système d'amortissement hydraulique 30 comprend un amortisseur comprenant une tige 32 et un piston 34 montés coulissants à l'intérieur d'un corps creux cylindrique 36.

La tige 32 et le piston 34 délimitent une première chambre 38 et une deuxième chambre 40 à l'intérieur du corps creux cylindrique 36. La tige 32 s'étend du côté de la première chambre 38.

La première chambre 38 contient du fluide 41 à une première pression P1, et la chambre du côté du piston 34 contient du fluide 41 à une deuxième pression P2.

La pression P1, P2 à l'intérieur de chaque chambre 38, 40 évolue en fonction du déplacement du piston 34 à l'intérieur du corps creux cylindrique 36, propre à fonctionner alternativement en compression et en détente.

Le fluide 41 est typiquement une huile adaptée aux systèmes hydrauliques.

Le système d'amortissement hydraulique 30 comprend en outre un pont de valves anti-retour 42, 44, 46, 48 reliées fluidiquement par un circuit hydraulique 49 d'une part à la première chambre 38 et d'autre part à la deuxième chambre 40.

Le circuit hydraulique 49 est formé par des flexibles hydrauliques ou de la tuyauterie rigide.

Les flexibles hydrauliques ou la tuyauterie rigide sont propres à permettre la circulation du fluide entre les différents éléments du système d'amortissement hydraulique 30. Dans la suite de la description, les branches du circuit hydraulique 49 sont ainsi formées par des flexibles hydrauliques ou des tuyaux rigides.

Les valves anti-retour 42, 44, 46, 48 sont par exemple des clapets anti-retour à ressort.

De préférence, les valves anti-retour 42, 44, 46, 48 ont un fonctionnement passif.

De préférence, les valves anti-retour 42, 44, 46, 48 sont au nombre de quatre.

Les valves anti-retour 42, 44, 46, 48 sont disposées par paire sur deux branches 50, 52 du circuit hydraulique 49 en parallèle des chambres 38, 40. Deux des valves anti-retour 42, 44, dites valves anti-retour proximales 42, 44 sont disposées en série sur l'une des branches 50 proche du corps creux cylindrique 36, dite branche proximale 50.

Les deux valves anti-retour proximales 42, 44 sont disposées en sens opposé et de telle sorte que lorsqu'elles sont ouvertes, le fluide 41 provenant des chambres 38, 40 peut les traverser.

L'une des valves anti-retour proximales 42 est disposée du côté de la tige 32, et l'autre des valves anti-retour proximales 44 est disposée du côté du piston 34.

Deux autres des valves anti-retour 46, 48 dites valves anti-retour distales 46, 48 sont disposées en série sur l'autre des branches 52 éloignée du corps creux cylindrique 36, dite branche distale 52.

Les deux valves anti-retour distales 46, 48 sont disposées en sens opposé et de telle sorte que lorsqu'elles sont ouvertes, le fluide 41 provenant des chambres 38, 40 ne peut pas les traverser.

L'une des valves anti-retour distales 46 est disposée du côté de la tige 32, et l'autre des valves anti-retour distales 48 est disposée du côté du piston 34.

De préférence, le système d'amortissement hydraulique 30 comprend en outre un accumulateur de fluide 60 et une valve active proportionnelle 62. L'accumulateur de fluide 60 comprend du fluide 41 à une pression d'accumulation P3.

L'accumulateur de fluide 60 est connecté fluidiquement aux valves anti-retour distales 46, 48, à la valve active proportionnelle 62 et au limiteur de pression 64.

L'accumulateur de fluide 60 est connecté aux valves anti-retour distales 46, 48 de telle sorte que le fluide 41 provenant de l'accumulateur de fluide 60 peut les traverser lorsqu'elles sont ouvertes.

L'accumulateur de fluide 60 est propre à compenser un volume de fluide 41 expulsé de la chambre 38, 40 active en l'amenant dans la chambre 38, 40 inactive.

Une chambre 38, 40 est dite active lorsque du fluide 41 est expulsé de cette chambre du fait du mouvement du piston 32 dans le corps creux 36, qui tend à réduire le volume d'une des chambres 38, 40 pendant que le volume de l'autre chambre 38, 40 augmente. Par opposition, l'autre chambre 38, 40 est inactive.

La valve active proportionnelle 62 est propre à gérer des différences de débit de fluide 41 entre une phase de compression et une phase de détente du système d'amortissement hydraulique semi-actif 30, tel que cela sera décrit ci-après.

La valve active proportionnelle 62 est disposée sur une branche 65 de circuit 49 reliant les branches proximale 50 et distale 52.

La branche 65 de circuit 49 sur laquelle est disposée la valve active proportionnelle 62 rejoint la branche proximale 50 entre les valves anti-retour proximales 42, 44 et la branche distale 52 entre les valves anti-retour 46, 48.

La valve active proportionnelle 62 comporte quatre orifices A, B, P et T d'entrée de fluide 41 disposés par paires de part et d'autre de la valve 62.

Les orifices A et B sont situés d'un côté de la valve 62 du côté de la branche proximale 50, et les orifices P et T sont situés de l'autre côté de la valve 62 du côté de la branche distale 52. L'orifice P fait face à l'orifice A, et l'orifice T fait face à l'orifice B.

De préférence, les orifices A, B, P et T de la valve active proportionnelle 62 sont de section variable, permettant ainsi la gestion des différences de débit de fluide 41.

Le circuit hydraulique 49 et le pont de valves anti-retour 42, 44, 46, 48 sont configurés de telle sorte que le fluide 41 circule toujours dans le même sens à l'intérieur de la valve active proportionnelle 62.

Ainsi, sur le schéma de la Figure 2, le fluide 41 circule toujours de P vers A et de B vers T.

La valve active proportionnelle 62 a un fonctionnement actif. En d'autres termes, l'ouverture de la valve active proportionnelle 62 est pilotable de sorte à ajuster le degré d'ouverture de celle-ci en fonction des différents débits de fluide.

Par exemple, la valve active proportionnelle 62 est une électrovanne, une servovalve ou un servodistributeur.

De préférence, la valve active proportionnelle 62 comporte une position de sécurité intégrée en cas de coupure d'alimentation.

Le système d'amortissement hydraulique 30 comprend également un limiteur de pression 64.

Le limiteur de pression 64 est disposé sur une branche 66 de circuit 49 reliant les branches proximale 50 et distale 52. La branche 66 de circuit 49 est parallèle à la branche 65 de circuit 49 sur laquelle est disposée la valve active proportionnelle 62.

En outre, la branche 66 de circuit 49 sur laquelle est disposé le limiteur de pression 64 rejoint la branche proximale 50 entre les valves anti-retour proximales 42, 44 et la branche distale 52 entre les valves anti-retour 46, 48.

Le limiteur de pression 64 présente deux orifices 67, 68 d'entrée de fluide 41 de part et d'autre du limiteur de pression 64.

Le circuit de flexibles ou tuyaux rigides 49 et le pont de valves anti-retour 42, 44, 46, 48 sont agencés de telle sorte que le fluide 41 circule toujours dans le même sens à l'intérieur du limiteur de pression 64, ici de la branche proximale 50 vers la branche distale 52.

De préférence, le limiteur de pression 64 est fermé en condition nominale de fonctionnement et est propre à libérer la circulation du fluide 41 dès lors que la pression P1, P2 au sein de la chambre active 38, 40 du corps creux cylindrique 36 dépasse une valeur réglée de pression de décharge PRV. Par exemple, la valeur réglée de pression de décharge PRV est comprise entre 100 bars et 150 bars. De préférence, le limiteur de pression 64 a un fonctionnement passif.

Cela permet d'éviter des dommages dus à une haute pression en cas de panne et cela permet de limiter les efforts générés par le système d'amortissement hydraulique semi-actif 30 à un niveau acceptable au niveau des structures d'attache de l'amortisseur semi-actif sur le châssis 22 du bogie 20 et la caisse 14 de la voiture 12

Le pont de valves anti-retour 42, 44, 46, 48 permet un redressement du débit de fluide 41 en sortie des deux chambres 38, 40 fonctionnant alternativement en compression et en détente.

Selon une variante du système d'amortissement hydraulique semi-actif 30, la branche proximale 50 et la branche distale 52 sont inversées, inversant ainsi la disposition des valves proximales 42, 44 et des valves distales 46, 48.

Selon cette variante, l'orientation de la valve active proportionnelle 62 et du limiteur de pression 64 est également inversée de façon à ce que les orifices d'entrée P, B et 67 de fluide 41 fassent toujours face au flux de fluide 41 en phase de compression ou de détente.

De préférence, le système d'amortissement hydraulique semi-actif 30 est intégré au moins partiellement à l'intérieur 18 de la voiture 12.

Cela permet de déporter les composants du système hydraulique semi-actif 30, hormis la tige 32, le piston 34 et le corps creux cylindrique 36, du bogie 20 vers l'intérieur 18 de la voiture 12 et de réduire l'espace requis sur le bogie 20. Les composants du système d'amortissement hydraulique semi-actif déportés à l'intérieur 18 perçoivent un niveau de vibrations moins élevé que s'ils se trouvaient sur le bogie 20.

Le système d'amortissement hydraulique semi-actif 30 inclus dans un véhicule ferroviaire selon l'invention présente un schéma hydraulique simple, nécessite peu de composants et ne nécessite pas de source d'énergie de puissance externe. Un débit alternatif de fluide 41 provenant de l'amortisseur est redressé par le pont de valves anti-retour 42, 44, 46, 48.

Un procédé de circulation du véhicule ferroviaire 10 va maintenant être expliqué plus en détail.

Lorsque le véhicule ferroviaire 10 circule sur les rails 26, il subit des vibrations et des variations de niveau selon la direction d'élévation V et/ou selon une direction transversale T perpendiculaire aux directions verticale V et de circulation L. Le système d'amortissement hydraulique semi-actif 30 permet d'amortir ces variations en alternant des phases de compression et des phases de détente en étant assemblé en position verticale (parallèle à la direction verticale V) entre le châssis 22 du bogie 20 et la caisse 14 de la voiture 12 et/ou en étant assemblé en position transversale (parallèle à la direction transversale T) entre le châssis 22 du bogie 20 et la caisse 14 de la voiture 12.

Une variante de montage du système d'amortissement hydraulique semi-actif peut aussi être envisagée en position horizontale définie par rapport à la direction transversale T ou par rapport à la direction de circulation L.

Une telle variante permet d'amortir un mouvement relatif de lacet du bogie 20 sous la caisse 14.

Une variante de montage du système d'amortissement hydraulique semi-actif peut aussi être envisagée en position verticale (parallèle à la direction verticale V). Une telle variante permet d'amortir un mouvement relatif de l'essieu 24 équipé de ses roues 23 par rapport au châssis 22 du bogie 20.

Durant la phase de compression, la tige 32 et le piston 34 séparant les chambres 38 et 40 se déplacent dans le sens de la compression.

Le volume de fluide 41 expulsé par le piston 34 de la deuxième chambre 40 est évacué de cette dernière pour alimenter la valve anti-retour proximale 44 du côté du piston 34 et la valve anti-retour distale 48 du côté du piston 34.

La valve anti-retour distale 48 du côté du piston 34 est fermée alors que la valve anti-retour proximale 44 du côté du piston 34 s'active, laissant ainsi circuler le volume de fluide 41 considéré.

Le limiteur de pression 64, la valve anti-retour proximale 42 disposée du côté de la tige 32, et les orifices P et B de la valve active proportionnelle 62 sont alimentés.

La valve anti-retour proximale 42 disposée du côté de la tige 32 est fermée. Le fluide 41 circule dans la valve active proportionnelle 62 de P vers A et de B vers T.

La circulation de fluide 41 à travers les orifices P, A, B, T de section variables de la valve active proportionnelle 62 génère une perte de charge variable, correspondant à la deuxième pression P2, qui définit une pression de travail de la deuxième chambre 40.

Le limiteur de pression 64 reste fermé en condition nominale de fonctionnement mais libère la circulation du fluide 41 dès lors que la deuxième pression P2 dépasse la valeur réglée de pression de décharge PRV.

Le fluide 41 alimente ensuite les valves anti-retour distales 46 et 48 ainsi que l'accumulateur de fluide 60 à la pression d'accumulation P3.

La valve anti-retour distale 48 du côté du piston 34 reste fermée par déséquilibre entre la deuxième pression P2 et la pression d'accumulation P3, la deuxième pression P2 étant supérieure à la pression d'accumulation P3.

La valve anti-retour distale 46 du côté de la tige 32 s'ouvre par déséquilibre entre la première pression P1 de la première chambre 38, définissant la pression de retour, et la pression d'accumulation P3, la pression d'accumulation P3 étant supérieure à la première pression P1, alimentant la première chambre 38.

Le volume de fluide 41 expulsé par le piston 34 de la deuxième chambre 40 à la deuxième pression P2 est compensé dans la première chambre 38 par l'accumulateur à la pression P3.

Durant la phase de détente, la tige 32 et le piston 34 séparant les chambres 38 et 40 se déplacent dans le sens de la détente.

Le volume de fluide 41 expulsé par le piston 34 de la première chambre 38 est évacué de cette dernière pour alimenter la valve anti-retour proximale 42 du côté de la tige 32 et la valve anti-retour distale 46 du côté de la tige 32.

La valve anti-retour distale 46 du côté de la tige 32 est fermée alors que la valve anti-retour proximale 42 du côté de la tige 32 s'active, laissant ainsi circuler le volume de fluide 41 considéré.

Le limiteur de pression 64, la valve anti-retour proximale 44 disposée du côté du piston 34, et les orifices P et B de la valve active proportionnelle 62 sont alimentés.

La valve anti-retour proximale 44 disposée du côté du piston 34 est fermée. Le fluide 41 circule dans la valve active proportionnelle 62 de P vers A et B vers T.

La circulation de fluide 41 à travers les orifices P, A, B, T de section variables de la valve active proportionnelle 62 génère une perte de charge variable, correspondant à la première pression P1, qui définit une pression de travail de la première chambre 38.

Le limiteur de pression 64 reste fermé en condition nominale de fonctionnement mais libère la circulation du fluide 41 dès lors que la première pression P1 dépasse la valeur réglée de pression de décharge PRV.

Le fluide 41 alimente ensuite les valves anti-retour distales 46 et 48 ainsi que l'accumulateur hydraulique 60 à la pression d'accumulation P3.

La valve anti-retour distale 46 du côté de la tige 32 reste fermée par déséquilibre entre la première pression P1 et la pression d'accumulation P3, la première pression P1 étant supérieure à la pression d'accumulation P3.

La valve anti-retour distale 48 du côté du piston 34 s'ouvre par déséquilibre entre la deuxième pression P2 de la deuxième chambre 40, définissant une pression de retour et la pression d'accumulation P3, la pression d'accumulation P3 étant supérieure à la deuxième pression P2, alimentant la deuxième chambre 40.

Le volume de fluide 41 expulsé de la première chambre 38 à la première pression P1 est compensé dans la deuxième chambre 40 par l'accumulateur de fluide 60 à la pression P3.

## Revendications

1. Véhicule ferroviaire (10) comprenant au moins une voiture (12) et au moins un bogie (20) portant la voiture (12), le bogie (20) comprenant un châssis (22) et un système d'amortissement hydraulique semi-actif (30) entre le châssis (22) et la voiture (12), la voiture (12) comprenant une caisse (14) délimitant un extérieur (16) de la voiture (12) et un intérieur (18) de la voiture (12), propre à recevoir des passagers ou des marchandises, le système d'amortissement hydraulique semi-actif (30) comprenant :
- un piston (34) et une tige (32) montés coulissants à l'intérieur d'un corps creux cylindrique (36), le piston (34) définissant une première chambre (38) et une deuxième chambre (40) dans le corps creux cylindrique (36), lesdites première et deuxième chambres s'étendant de part et d'autre dudit piston (34), la tige (32) s'étendant dans la première chambre (38),
- un pont de valves (42, 44, 46, 48), connecté fluidiquement respectivement à la première chambre (38) et à la deuxième chambre (40), le pont de valves (42, 44, 46, 48) comprenant quatre valves anti-retour passives (42, 44, 46, 48), et
- un limiteur de pression (64), le système d'amortissement hydraulique semi-actif (30) étant configuré pour assurer une circulation de fluide (41) en sens unique à travers le système d'amortissement,
**caractérisé en ce que** le système d'amortissement hydraulique (30) est dépourvu de source d'énergie de puissance extérieure au système (30), par exemple une source d'énergie électrique ou une source d'énergie pneumatique, et dans lequel le système d'amortissement hydraulique semi-actif (30) est intégré au moins partiellement à l'intérieur (18) de la voiture (12).

2. Véhicule ferroviaire (10) selon la revendication 1, dans lequel le système d'amortissement hydraulique semi-actif (30) comprend en outre un accumulateur de fluide (60) connecté fluidiquement au pont de valves (42, 44, 46, 48).

3. Véhicule ferroviaire (10) selon la revendication 1 ou 2, dans lequel le système d'amortissement hydraulique semi-actif (30) comprend en outre une valve active proportionnelle (62) connectée fluidiquement au pont de valves (42, 44, 46, 48).

4. Véhicule ferroviaire (10) selon la revendication 3, dans lequel la valve active proportionnelle (62) et le limiteur de pression (64) sont montés en parallèle.

5. Véhicule ferroviaire (10) selon l'une quelconque des revendications 1 à 4, dans lequel le système d'amortissement hydraulique semi-actif (30) est agencé de telle sorte que lorsque la deuxième chambre (40) contient du fluide (41) à une deuxième pression (P2) supérieure à une première pression (P1) du fluide (41) contenu dans la première chambre (38), le fluide (41) contenu dans la deuxième chambre (40) est expulsé de la deuxième chambre (40) en direction du limiteur de pression (64), et/ou de la valve proportionnelle (62), et/ou de l'accumulateur de fluide (60) avant d'être dirigé vers la première chambre (38).

6. Véhicule ferroviaire (10) selon l'une quelconque des revendications 1 à 5, dans lequel le système d'amortissement hydraulique semi-actif (30) est agencé de telle sorte que lorsque la première chambre (38) contient du fluide (41) à une première pression (P1) supérieure à la deuxième pression (P2) du fluide contenu dans la deuxième chambre (40), le fluide (41) contenu dans la première chambre (38) est expulsé de la première chambre (38) en direction du limiteur de pression (64), et/ou de la valve proportionnelle (62), et/ou de l'accumulateur de fluide (60) avant d'être dirigé vers la deuxième chambre (40).

7. Procédé de circulation d'un véhicule ferroviaire (10) selon l'une quelconque des revendications précédentes, le pont de valves (42, 44, 46, 48) comprenant une valve anti-retour proximale (42) du côté de la tige (32), une valve anti-retour proximale (44) du côté du piston(34), une valve anti-retour distale (46) du côté de la tige (32), et une valve anti-retour distale (48) du côté du piston (34),
dans lequel, lors d'une phase de compression,
- la valve anti-retour distale (48) du côté du piston (34) est fermée alors que la valve anti-retour proximale (44) du côté du piston (34) s'active, laissant ainsi circuler le volume de fluide (41) expulsé de la deuxième chambre (40),
- le limiteur de pression (64) et la valve anti-retour proximale (42) disposée du côté de la tige (32) sont alimentés,
- la valve anti-retour proximale (42) disposée du côté de la tige (32) est fermée,
- le limiteur de pression (64) reste fermé en condition nominale de fonctionnement mais libère la circulation du fluide (41) dès lors que la deuxième pression (P2) dépasse une valeur réglée de pression de décharge (PRV),
- le fluide (41) alimente ensuite les valves anti-retour distales (46) et (48),
- la valve anti-retour distale (48) du côté du piston (34) reste fermée par déséquilibre entre la deuxième pression (P2) et une pression de fluide (41) régnant dans une branche distale (52) de circuit hydraulique (49) entre les valves anti-retour distales (46) et (48), la deuxième pression (P2) étant supérieure à la pression de fluide (41) régnant dans la branche distale (52),
- la valve anti-retour distale (46) du côté de la tige (32) s'ouvre par déséquilibre entre la première pression (P1) de la première chambre (38), et la pression de fluide (41) régnant dans la branche distale (52), la pression de fluide (41) régnant dans la branche distale (52) étant supérieure à la première pression (P1), alimentant la première chambre (38), dans lequel le système d'amortissement hydraulique (30) est dépourvu de source d'énergie de puissance extérieure au système (30), par exemple une source d'énergie électrique ou une source d'énergie pneumatique.

8. Procédé de circulation d'un véhicule ferroviaire selon la revendication précédente,
dans lequel lors d'une phase de détente, la valve anti-retour distale (46) du côté de la tige (32) est fermée alors que la valve anti-retour proximale (42) du côté de la tige (32) s'active, laissant ainsi circuler le volume de fluide (41) expulsé de la première chambre (38),
- le limiteur de pression (64) et la valve anti-retour proximale (44) disposée du côté du piston (34) sont alimentés,
- la valve anti-retour proximale (44) disposée du côté du piston (34) est fermée,
- le limiteur de pression (64) reste fermé en condition nominale de fonctionnement mais libère la circulation du fluide (41) dès lors que la première pression (P1) dépasse la valeur réglée de pression de décharge (PRV),
- le fluide (41) alimente ensuite les valves anti-retour distales (46) et (48)
- la valve anti-retour distale (46) du côté de la tige (32) reste fermée par déséquilibre entre la première pression (P1) et la pression de fluide (41) régnant dans la branche distale (52), la deuxième pression (P2) étant supérieure à la pression de fluide (41) régnant dans la branche distale (52),
- la valve anti-retour distale (48) du côté du piston (34) s'ouvre par déséquilibre entre la deuxième pression (P2) et la pression de fluide (41) régnant dans la branche distale (52), la pression de fluide (41) régnant dans la branche distale (52) étant supérieure à la deuxième pression (P2), alimentant la deuxième chambre (40).

9. Procédé de circulation d'un véhicule ferroviaire (10) selon la revendication 7 ou 8, dans lequel le système d'amortissement semi-actif comprend en outre un accumulateur de fluide (60) comprenant du fluide (41) à une pression (P3) et une valve active proportionnelle (62) connectés fluidiquement au pont de valves (42, 44, 46, 48), la circulation de fluide (41) à travers la valve active proportionnelle (62) générant une perte de charge variable, et dans lequel le volume de fluide (41) expulsé de la deuxième chambre (40) à la deuxième pression (P2) est compensé dans la première chambre (38) à la première pression (P1) par l'accumulateur de fluide (60) à la pression (P3), respectivement le volume de fluide (41) expulsé de la première chambre (38) à la première pression (P1) est compensé dans la deuxième chambre (40) à la deuxième pression (P2) par l'accumulateur de fluide (60) à la pression (P3).

## Patentansprüche

1. Schienenfahrzeug (10), umfassend mindestens einen Wagen (12) und mindestens ein Drehgestell (20), das den Wagen (12) trägt, das Drehgestell (20) umfassend einen Rahmen (22) und ein halbaktives hydraulisches Dämpfungssystem (30) zwischen dem Rahmen (22) und dem Wagen (12), der Wagen (12) umfassend einen Wagenkasten (14) umfasst. der eine Außenseite (16) des Wagens (12) und eine Innenseite (18) des Wagens (12) begrenzt, der geeignet ist, um Fahrgäste oder Güter aufzunehmen, das halbaktive hydraulische Dämpfungssystem (30) umfassend:
- einen Kolben (34) und eine Stange (32), die verschiebbar innerhalb eines zylindrischen Hohlkörpers (36) montiert sind, wobei der Kolben (34) eine erste Kammer (38) und eine zweite Kammer (40) in dem zylindrischen Hohlkörper (36) definiert, wobei sich die erste und die zweite Kammer auf beiden Seiten des Kolbens (34) erstrecken, wobei sich die Stange (32) in die erste Kammer (38) erstreckt,
- eine Ventilbrücke (42, 44, 46, 48), die fluidisch jeweils mit der ersten Kammer (38) und der zweiten Kammer (40) verbunden ist, die Ventilbrücke (42, 44, 46, 48) umfassend vier passive Rückschlagventile (42, 44, 46, 48), und
- einen Druckbegrenzer (64), wobei das halbaktive hydraulische Dämpfungssystem (30) konfiguriert ist, um eine Fluidzirkulation (41) in eine Richtung durch das Dämpfungssystem zu gewährleisten, **dadurch gekennzeichnet, dass** das hydraulische Dämpfungssystem (30) frei von einer Leistungsenergiequelle außerhalb des Systems (30) ist, beispielsweise einer elektrischen Energiequelle oder einer pneumatischen Energiequelle, und wobei das halbaktive hydraulische Dämpfungssystem (30) zumindest teilweise in das Innere (18) des Wagens (12) integriert ist.

2. Schienenfahrzeug (10) nach Anspruch 1, wobei das halbaktive hydraulische Dämpfungssystem (30) ferner einen Fluidakkumulator (60) umfasst, der fluidisch mit der Ventilbrücke (42, 44, 46, 48) verbunden ist.

3. Schienenfahrzeug (10) nach Anspruch 1 oder 2, wobei das halbaktive hydraulische Dämpfungssystem (30) ferner ein aktives Proportionalventil (62) umfasst, das fluidisch mit der Ventilbrücke (42, 44, 46, 48) verbunden ist.

4. Schienenfahrzeug (10) nach Anspruch 3, wobei das aktive Proportionalventil (62) und der Druckbegrenzer (64) parallel montiert sind.

5. Schienenfahrzeug (10) nach einem der Ansprüche 1 bis 4, wobei das halbaktive hydraulische Dämpfungssystem (30) angeordnet ist, dass, wenn die zweite Kammer (40) Fluid (41) mit einem zweiten Druck (P2) enthält, der höher ist als ein erster Druck (P1) des Fluids (41), das in der ersten Kammer (38) enthalten ist, das in der zweiten Kammer (40) enthaltene Fluid (41) aus der zweiten Kammer (40) in Richtung des Druckbegrenzers (64) und/oder des Proportionalventils (62) und/oder des Fluidspeichers (60) ausgestoßen wird, bevor es zu der ersten Kammer (38) geleitet wird.

6. Schienenfahrzeug (10) nach einem der Ansprüche 1 bis 5, wobei das halbaktive hydraulische Dämpfungssystem (30) angeordnet ist, dass, wenn die erste Kammer (38) Fluid (41) mit einem ersten Druck (P1) enthält, der höher ist als der zweite Druck (P2) des in der zweiten Kammer (40) enthaltenen Fluids, das in der ersten Kammer (38) enthaltene Fluid (41) aus der ersten Kammer (38) in Richtung des Druckbegrenzers (64) und/oder des Proportionalventils (62) und/oder des Fluidspeichers (60) ausgestoßen wird, bevor es zu der zweiten Kammer (40) geleitet wird.

7. Verfahren zum Fahren eines Schienenfahrzeugs (10) nach einem der vorherigen Ansprüche, die Ventilbrücke (42, 44, 46, 48) umfassend ein proximales Rückschlagventil (42) auf der Seite der Stange (32), ein proximales Rückschlagventil (44) auf der Seite des Kolbens (34), ein distales Rückschlagventil (46) auf der Seite der Stange (32) und ein distales Rückschlagventil (48) auf der Seite des Kolbens (34),
wobei, in einer Kompressionsphase
- das distale Rückschlagventil (48) auf der Seite des Kolbens (34) geschlossen ist, während das proximale Rückschlagventil (44) auf der Seite des Kolbens (34) aktiviert wird, wodurch das aus der zweiten Kammer (40) ausgestoßene Fluidvolumen (41) zirkulieren kann,
- der Druckbegrenzer (64) und das proximale Rückschlagventil (42), das auf der Seite der Stange (32) angeordnet ist, versorgt werden,
- das proximale Rückschlagventil (42), das auf der Seite der Stange (32) angeordnet ist, geschlossen ist,
- der Druckbegrenzer (64) im Nennbetriebszustand geschlossen bleibt, aber die Fluidzirkulation (41) freigibt, sobald der zweite Druck (P2) einen eingestellten Entlastungsdruckwert (PRV) überschreitet,
- das Fluid (41) dann die distalen Rückschlagventile (46) und (48) versorgt,
- das distale Rückschlagventil (48) auf der Seite des Kolbens (34) durch ein Ungleichgewicht zwischen dem zweiten Druck (P2) und einem Fluiddruck (41), der in einem distalen Zweig (52) des Hydraulikkreises (49) zwischen den distalen Rückschlagventilen (46) und (48) herrscht, geschlossen bleibt, wobei der zweite Druck (P2) größer ist als der Fluiddruck (41), der in dem distalen Zweig (52) herrscht,
- das distale Rückschlagventil (46) auf der Seite der Stange (32) durch ein Ungleichgewicht zwischen dem ersten Druck (P1) der ersten Kammer (38) und dem in dem distalen Zweig (52) herrschenden Fluiddruck (41) öffnet, wobei der in dem distalen Zweig (52) herrschende Fluiddruck (41) höher ist als der erste Druck (P1), die erste Kammer (38) versorgt, wobei das hydraulische Dämpfungssystem (30) frei von einer Leistungsenergiequelle außerhalb des Systems (30) ist, z. B. einer elektrischen Energiequelle oder einer pneumatischen Energiequelle.

8. Verfahren zum Fahren eines Schienenfahrzeugs nach dem vorherigen Anspruch,
wobei, in einer Entspannungsphase, das distale Rückschlagventil (46) auf der Seite der Stange (32) geschlossen ist, während das proximale Rückschlagventil (42) auf der Seite der Stange (32) aktiviert wird, wodurch das aus der ersten Kammer (38) ausgestoßene Fluidvolumen (41) zirkulieren kann,
- der Druckbegrenzer (64) und das proximale Rückschlagventil (44), das auf der Seite des Kolbens (34) angeordnet ist, versorgt werden,
- das proximale Rückschlagventil (44), das auf der Seite des Kolbens (34) angeordnet ist, geschlossen ist,
- der Druckbegrenzer (64) im Nennbetriebszustand geschlossen bleibt, aber die Fluidzirkulation (41) freigibt, sobald der erste Druck (P1) den eingestellten Entlastungsdruckwert (PRV) überschreitet,
- das Fluid (41) dann die distalen Rückschlagventile (46) und (48) versorgt,
- das distale Rückschlagventil (46) auf der Seite der Stange (32) durch ein Ungleichgewicht zwischen dem ersten Druck (P1) und dem Fluiddruck (41), der in dem distalen Zweig (52) herrscht, geschlossen bleibt, wobei der zweite Druck (P2) größer ist als der Fluiddruck (41), der in dem distalen Zweig (52) herrscht,
- das distale Rückschlagventil (48) auf der Seite des Kolbens (34) durch ein Ungleichgewicht zwischen dem zweiten Druck (P2) und dem in dem distalen Zweig (52) herrschenden Fluiddruck (41) öffnet, wobei der in dem distalen Zweig (52) herrschende Fluiddruck (41) größer ist als der zweite Druck (P2), wodurch die zweite Kammer (40) versorgt wird.

9. Verfahren zum Fahren eines Schienenfahrzeugs (10) nach Anspruch 7 oder 8, wobei das halbaktive Dämpfungssystem ferner einen Fluidakkumulator (60) mit Fluid (41) bei einem Druck (P3) und ein aktives Proportionalventil (62) umfasst, die fluidisch mit der Ventilbrücke (42, 44, 46, 48) verbunden sind, wobei die Zirkulation von Fluid (41) durch das aktive Proportionalventil (62) einen variablen Druckverlust erzeugt, und wobei das aus der zweiten Kammer (40) bei dem zweiten Druck (P2) ausgestoßene Fluidvolumen (41) in der ersten Kammer (38) bei dem ersten Druck (P1) durch den Fluidakkumulator (60) bei dem Druck (P3) kompensiert wird, bzw. das aus der ersten Kammer (38) bei dem ersten Druck (P1) ausgestoßene Fluidvolumen (41) in der zweiten Kammer (40) bei dem zweiten Druck (P2) durch den Fluidakkumulator (60) bei dem Druck (P3) kompensiert wird.

## Claims

1. A railway vehicle (10) comprising at least one car (12) and at least one bogie (20) carrying the car (12), the bogie (20) comprising a chassis (22) and a semi-active hydraulic damping system (30) between the chassis (22) and the car (12), the car (12) comprising a body (14) defining an exterior (16) of the car (12) and an interior (18) of the car (12) suitable for accommodating passengers or freight, the semi-active hydraulic damping system (30) comprising:
- a piston (34) and a rod (32) slidably mounted within a cylindrical hollow body (36), the piston (34) defining a first chamber (38) and a second chamber (40) in the cylindrical hollow body (36), said first and second chambers extending on either side of said piston (34), the rod (32) extending into the first chamber (38),
- a valve bridge (42, 44, 46, 48), fluidly connected to the first chamber (38) and the second chamber (40) respectively, the valve bridge (42, 44, 46, 48) comprising four passive non-return valves (42, 44, 46, 48), and
- a pressure relief valve (64), the semi-active hydraulic damping system (30) being configured to provide a one-way flow of fluid (41) through the damping system, **characterised in that** the hydraulic damping system (30) is devoid of a power source external to the system (30), for example an electrical power source or a pneumatic power source, and wherein the semi-active hydraulic damping system (30) is integrated at least partially within the interior (18) of the car (12).

2. The railway vehicle (10) according to claim 1, wherein the semi-active hydraulic damping system (30) further comprises a fluid accumulator (60) fluidly connected to the valve bridge (42, 44, 46, 48).

3. The railway vehicle (10) according to claim 1, wherein the semi-active hydraulic damping system (30) further comprises an active proportional valve (62) fluidly connected to the valve bridge (42, 44, 46, 48).

4. The railway vehicle (10) according to claim 3, wherein the active proportional valve (62) and the pressure relief valve (64) are connected in parallel.

5. The railway vehicle (10) according to any one of claims 1 to 4, wherein the semi-active hydraulic damping system (30) is arranged such that when the second chamber (40) contains fluid (41) at a second pressure (P2) higher than a first pressure (P1) of the fluid (41) contained in the first chamber (38), the fluid (41) contained in the second chamber (40) is expelled from the second chamber (40) towards the pressure relief valve (64), and/or the proportional valve (62), and/or the fluid accumulator (60), before being directed towards the first chamber (38).

6. The railway vehicle (10) according to any one of claims 1 to 5, wherein the semi-active hydraulic damping system (30) is arranged such that when the first chamber (38) contains fluid (41) at a first pressure (P1) higher than a second pressure (P2) of the fluid (41) contained in the secondchamber (40), the fluid (41) contained in the first chamber (38) is expelled from the first chamber (38) towards the pressure relief valve (64), and/or the proportional valve (62), and/or the fluid accumulator (60), before being directed towards the second chamber (40).

7. A method of running a railway vehicle (10) according to any one of the preceding claims, the valve bridge (42, 44, 46, 48) comprising a proximal non-return valve (42) on the side of the rod (32), a proximal non-return valve (44) on the side of the piston (34), a distal non-return valve (46) on the side of the rod (32), and a distal non-return valve (48) on the side of the piston (34)
in which, during a compression phase,
- the distal non-return valve (48) on the side of the piston (34) is closed while the proximal non-return valve (44) on the side of the piston (34) is activated, thus allowing the volume of fluid (41) expelled from the second chamber (40) to flow,
- the pressure relief valve (64) and the proximal non-return valve (42) on the side of the rod (32) are being supplied,
- the proximal non-return valve (42) on the side of the rod (32) is closed,
- the pressure relief valve (64) remains closed in the nominal operating condition but releases the fluid flow (41) as soon as the second pressure (P2) exceeds a set pressure relief value (PRV),
- the fluid (41) then supplies the distal non-return valves (46) and (48),
- the distal non-return valve (48) on the side of the piston (34) remains closed due to an imbalance between the second pressure (P2) and a fluid pressure (41) prevailing in a distal branch (52) of the hydraulic circuit (49) between the distal non-return valves (46) and (48), the second pressure (P2) being higher than the fluid pressure (41) prevailing in the distal branch (52),
- the distal non-return valve (46) on the side of the rod (32) opens due to an imbalance between the first pressure (P1) of the first chamber (38) and the fluid pressure (41) in the distal branch (52), the fluid pressure (41) in the distal branch (52) being higher than the first pressure (P1) feeding the first chamber (38), wherein the hydraulic damping system (30) is devoid of a power source external to the system (30), for example an electrical power source or a pneumatic power source.

8. The method of running a railway vehicle according to the preceding claim, wherein during an expansion phase, the distal non-return valve (46) on the side of the rod (32) is closed while the proximal non-return valve (42) on the side of the rod (32) is activated, thus allowing the volume of fluid (41) expelled from the first chamber (38) to flow,
- the pressure relief valve (64) and the proximal non-return valve (44) on the side of the piston (34) are being supplied,
- the proximal non-return valve (44) on the side of the piston (34) is closed,
- the pressure relief valve (64) remains closed in the nominal operating condition but releases the fluid flow (41) as soon as the first pressure (P1) exceeds the set pressure relief value (PRV),
- the fluid (41) then supplies the distal non-return valves (46) and (48),
- the distal non-return valve (46) on the side of the rod (32) remains closed due to an imbalance between the first pressure (P1) and the fluid pressure (41) in the distal branch (52), the second pressure (P2) being higher than the fluid pressure (41) in the distal branch (52),
- the distal non-return valve (48) on the side of the piston (34) opens as a result of an imbalance between the second pressure (P2) and the fluid pressure (41) in the distal branch (52), the fluid pressure (41) prevailing in the distal branch (52) being higher than the second pressure (P2), thus supplying the second chamber (40).

9. The method of running a railway vehicle (10) according to claim 7 or 8, wherein the semi-active damping system further comprises a fluid accumulator (60) comprising fluid (41) at a pressure (P3) and a proportional active valve (62) fluidly connected to the valve bridge (42,44,46,48), the flow of fluid (41) through the proportional active valve (62) generating a variable pressure drop and wherein the volume of fluid (41) expelled from the second chamber (40) at the second pressure (P2) is offset in the first chamber (38) at the first pressure (P1) by the fluid accumulator (60) at the pressure (P3), respectively the volume of fluid (41) expelled from the first chamber (38) at the first pressure (P1) is offset in the second chamber (40) at the second pressure (P2) by the fluid accumulator (60) at the pressure (P3).
